# FASCICULE DE BREVET EUROPEEN

(11) **EP 2 044 478 B1**
(45) Date de publication et mention de la délivrance du brevet: **13.01.2010**
(21) Numéro de dépôt: 07720226.5
(22) Date de dépôt: 17.07.2007
(51) Int. Cl.: G02B 6/44, H02G 1/08

(54) **DISPOSITF D'INSTALLATION D'UN CABLE DANS UN CONDUIT**
EINRICHTUNG ZUM INSTALLIEREN EINES KABELS IN EINEM ROHR
DEVICE FOR INSTALLING A CABLE IN A CONDUIT

(30) Priorité: 24.07.2006 EP 06405318
(43) Date de publication de la demande: 08.04.2009
(73) Titulaire: Plumettaz S.A., 1880 Bex (CH)
(72) Inventeur: PLUMETTAZ, Gérard, CH-1820 Territet-Veytaux (CH)
(74) Mandataire: Vigand, Philippe
(86) Numéro de dépôt international: PCT/CH2007/000345
(87) Numéro de publication internationale: WO 2008/011737

(56) Documents cités:
- EP-A- 0 251 129
- EP-A2- 0 294 243
- FR-A1- 2 807 226
- JP-A- 1 097 112
- US-A- 4 756 510
- US-A1- 2002 079 697
- US-A1- 2003 106 199
- US-B1- 6 328 283

## Description

La présente invention se rapporte au domaine technique des installations et poses de câbles, par exemple à fibres optiques ou électriques, à l'intérieur de conduits enterrés, emmurés et/ou immergés. Sous le terme "câbles", il faut aussi comprendre des tubes ou autres permettant de transporter de l'énergie, des fluides et des signaux électriques, lumineux ou autres. Le terme câble concerne également des câbles électriques de basses, moyennes et hautes puissances, monophasés ou triphasés.

On connaît différentes méthodes pour installer des câbles à l'intérieur de conduits enterrés. Quelques unes de ces méthodes sont définies ci-après.

Par "tirage", on entend que le câble est attaché par son extrémité à une élingue déjà installée dans le conduit. Cette élingue est accrochée au tambour d'un treuil qui enroule cette dernière et permet la pose du câble dans le conduit, par tirage et glissement dudit câble à l'intérieur dudit conduit.

Par "tirage-poussage", on entend un tirage et un poussage simultanés avec l'utilisation de moyens permettant de pousser le câble à son entrée dans le conduit, et ce pour diminuer les efforts de traction sur la tête de câble et pour augmenter la distance d'installation. Des moyens additionnels d'entraînement du câble disposés le long du parcours peuvent également être prévus.

Par "soufflage", on entend que le conduit est mis en pression, à l'aide d'un fluide, entre les moyens d'alimentation en câble et un furet étanche accroché à la tête du câble. La pression régnant à l'intérieur du conduit permet ainsi de déplacer le furet, tirant sur la tête de câble. La mise sous pression se fait généralement avec de l'air.

Par "soufflage-poussage", on entend l'utilisation de moyens permettant de pousser le câble à son entrée dans le conduit, associés aux moyens mis en oeuvre dans la méthode dite par "soufflage". Là encore, on obtient une augmentation de la distance d'installation du câble.

Par "flottage-poussage" et/ou "portage-poussage", on entend une technique dans laquelle un fluide, généralement de l'air ou de l'eau, est injecté dans le conduit à une vitesse supérieure à la vitesse de progression du câble, et c'est le frottement du fluide sur la gaine extérieure du câble qui exerce la force de traction.

Dans certaines techniques de "tirage-poussage", on injecte également de l'eau dans le conduit. La force de traction provient d'un furet fixé à l'extrémité de tête du câble sur laquelle s'exerce la pression d'eau injectée dans le conduit. A cette fin, le furet est muni d'un ou de plusieurs joints d'étanchéité.

Un des avantages des techniques à injection d'eau ou d'autres liquides est la réduction de la force d'appui du câble contre la paroi intérieure du conduit et par conséquent des forces de frottement, réduction due à la force d'Archimède exercée sur le câble. La distance d'installation est toutefois limitée par la pression d'eau maximale admissible appliquée au furet, qui est déterminée par la pression maximale qui peut être appliquée sur le conduit.

Les conduits enterrés utilisés avec les techniques à injection d'eau sont souvent des tubes lisses, en PE ou en PVC extrudé. Ces conduits doivent avoir des parois suffisamment épaisses, soit 5 à 10% de leur diamètre pour le PE, 4 à 5% de leur diamètre pour le PVC directement enfoui en terre, et environ 2% de leur diamètre pour les conduits PVC enrobés de béton, pour pouvoir résister aux contraintes du sol et de la pression d'eau requise pour l'installation du câble, avec les inconvénients d'augmentation des coûts et de réduction de la longueur d'installation par rapport à des conduits à paroi plus mince.

Il existe sur le marché d'autres types de conduits et tubes protecteurs à paroi mince pour l'installation de câbles enterrés offrant une bonne résistance à l'écrasement, tels que les conduits cannelés, à double paroi munis de cannelures périphériques. Les conduits cannelés à double paroi sont, en relation avec leur poids par unité de longueur, beaucoup plus résistants à la compression et à l'écrasement que des tubes lisses utilisés comme conduits pour l'installation de câbles par injection d'eau. Les conduits cannelés à double paroi n'ont toutefois pas été conçus pour l'installation de câbles par soufflage ou flottage-poussage, et ne supportent pas des pressions élevées à l'intérieur du conduit.

Vu la minceur de la paroi interne de ces conduits, une mise en pression d'un tel conduit cannelé à double paroi provoque d'une part une dilatation radiale du conduit, pouvant aller jusqu'à sa déchirure, ainsi qu'une dilatation axiale provoquant un allongement du conduit. De tels conduits cannelés à double paroi sont donc, à priori, inadaptés à une pose de câble impliquant une mise en pression dudit conduit.

L'inventeur de la présente invention a toutefois réalisé que des conduits cannelés à double paroi peuvent être utilisés pour la pose de câbles en utilisant des techniques de poussage par injection d'eau, lorsque lesdits conduits sont enterrés. En effet, la terre entourant le conduit empêche d'une part la dilatation radiale du conduit et d'autre part en s'incrustant entre les cannelures à l'extérieur du conduit, empêche la dilatation axiale, respectivement son allongement.

Par contre il n'en est pas de même aux extrémités des sections de conduits où lesdits conduits ne sont plus enterrés et où des précautions particulières sont à prendre afin d'éviter d'une part la déchirure d'une arête du conduit et/ou son allongement.

Les dispositifs décrits dans EP-0.251.129 et DE-197 45 918 ne conviennent pas du tout à l'usage proposé ici vu qu'ils sont uniquement destinés à la pose de câbles dans des conduits enterrés lisses et ne disposent d'aucun moyen apte à empêcher l'allongement du conduit.

Le document US 2003/106 199 A1 décrit un dispositif d'installation d'un câble dans un conduit par soufflage. Ce dispositif peut être monté sur un conduit cannelé.

Un but de l'invention est de fournir un dispositif d'installation d'un câble dans un conduit enterré, utilisant des conduits légers cannelés à double paroi, sans compromettre la distance d'installation, c'est-à-dire la longueur du câble qui peut être installée dans son conduit, tout en assurant l'intégrité du conduit.

Il est avantageux de fournir un furet d'installation de câbles apte à être utilisé dans les techniques d'installation dans lesquelles un fluide, par exemple de l'eau, est injecté dans le conduit de câble pour pousser ledit furet.

Il est avantageux de fournir un dispositif d'installation qui soit apte à être utilisé pour l'installation de câbles à section non circulaire, telle qu'approximativement triangulaire ou carrée, en réduisant, voire éliminant les fuites de liquide.

Il est avantageux de fournir un système d'installation de câbles dans un conduit qui soit fiable et économe.

Des buts de l'invention sont réalisés par un dispositif d'installation de câbles tel que décrit dans la revendication 1, des formes d'exécution particulières ou variantes étant décrites dans les revendications dépendantes.

D'autres caractéristiques et aspects avantageux de l'invention ressortiront également de la description détaillée donnée ci-après, en référence aux dessins annexés, dans lesquels:

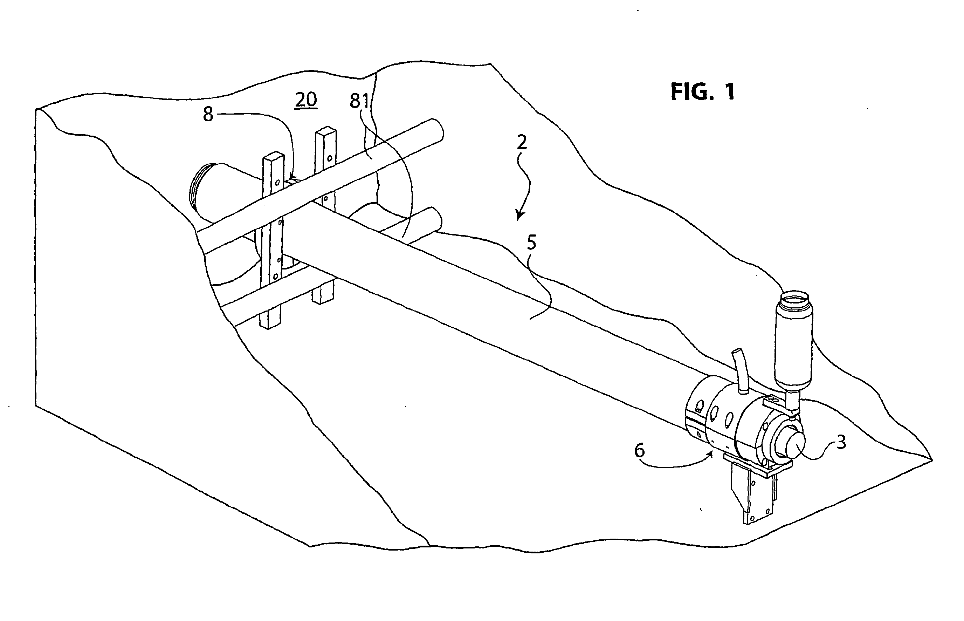

la Fig. 1 est une vue en perspective d'une partie en amont d'un dispositif d'installation d'un câble selon l'invention dans un conduit;
la Fig. 2 est une vue en coupe de la partie du dispositif d'installation selon la Fig. 1;
la Fig. 3 est une vue en coupe détaillée d'une partie du dispositif d'installation montrant le dispositif d'admission d'eau dans le conduit ;
la Fig. 4 est une vue en perspective d'une partie en aval d'un dispositif d'installation d'un câble selon l'invention dans un conduit; et
la Fig. 5 est une vue en coupe de la partie d'un dispositif d'installation selon la Fig. 4.

Le dispositif est décrit tout d'abord dans une configuration de pose par « tirage-poussage » avec mise en pression du conduit pour le déplacement d'un furet.

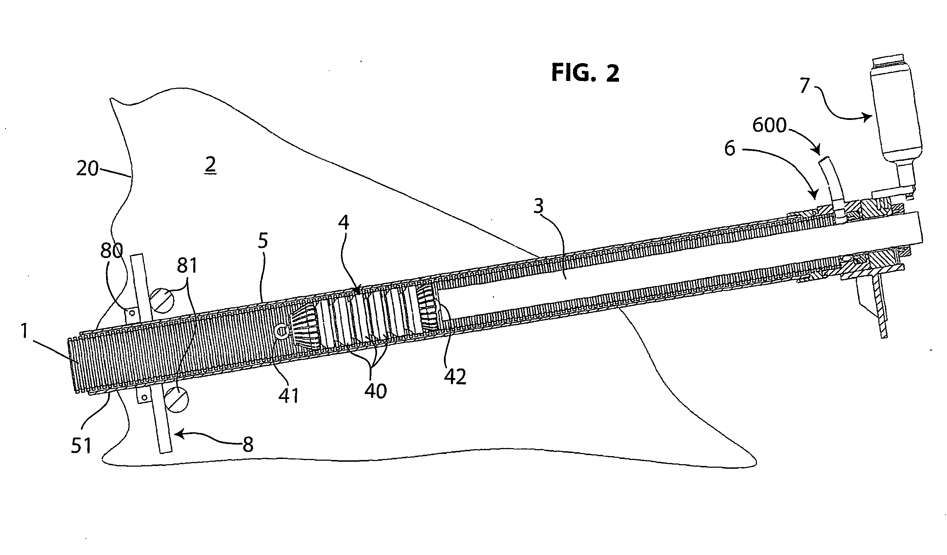

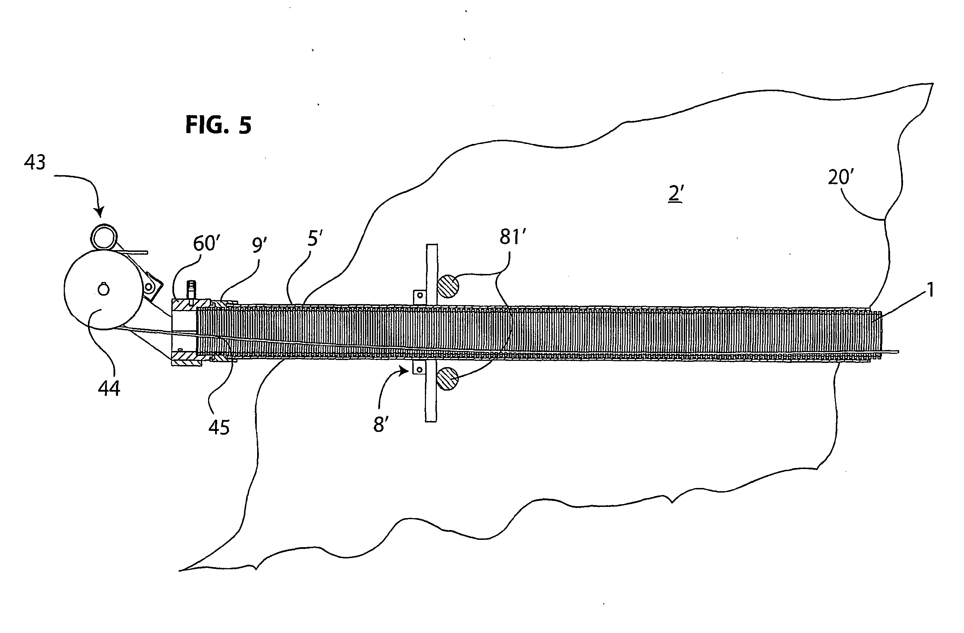

En faisant référence aux figures, on a un conduit enterré 1, de type cannelé à double paroi, dont les deux extrémités débouchent chacune dans une tranché 2, 2' aménagées pour permettre la pose d'un câble ou autre élément à l'intérieur dudit conduit 1. On remarque en particulier sur les figures 2 et 5 que le conduit 1, débouchant de la paroi 20, 20' de la tranchée se prolonge sur une certaine longueur à l'extérieur de ladite paroi 20, 20'.

Un simple raccordement d'une installation de mise en pression sur une extrémité libre du conduit 1 conduirait, lors de l'opération de pose du câble, à une destruction de la portion non enterrée ou hors sol du conduit 1, par déchirure et allongement de ladite portion.

Afin d'éviter ce problème on dispose d'un dispositif d'installation d'un câble 3 par un furet d'installation 4 comprenant un manchon support 5, un dispositif de fixation 6, connecté à un circuit d'alimentation 600 en fluide sous pression, par exemple de l'eau, éventuellement un réservoir de lubrifiant 7 et un dispositif d'ancrage 8. Le dispositif d'installation de câble peut encore comprendre un système de poussage et de guidage de câbles, (non illustré) installé en amont du dispositif de fixation 6. Le dispositif de poussage est connu en soi, par exemple par EP-0.006.097 et ne sera donc pas décrit plus en détail. Le furet 4 est également connu en soi, par exemple par EP-1.518.307, et comprend une pluralité de joints à lèvres coniques 40 aptes à supporter la pression d'eau injectée dans le conduit 1, et des moyens de fixation 41, 42 à l'arrière et à l'avant du furet pour la fixation respectivement au câble et, le cas échéant, à une élingue de tirage (non illustrée sur cette figure).

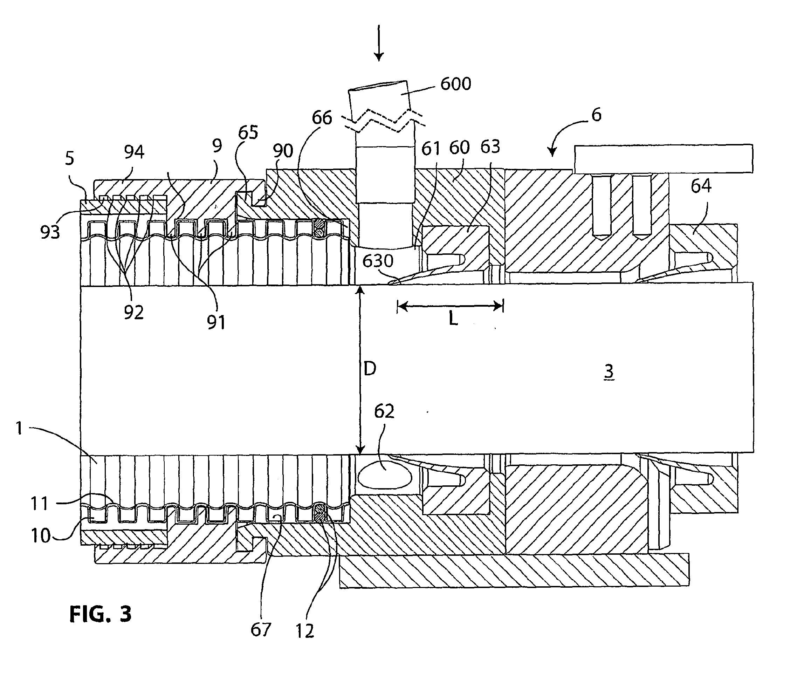

Faisant surtout référence à la Fig. 3, le dispositif de fixation 6 comprend un corps de fixation 60, définissant dans ce cas une chambre d'admission de fluide 61, en communication avec une entrée de fluide 62 dans laquelle l'eau ou un autre fluide est injecté sous pression en direction de l'intérieur du conduit (1). Le corps de fixation 60 est relié à une canalisation extérieure 600 fournissant le fluide sous pression.

Le dispositif de fixation 6 comprend en outre un joint 63 destiné à entourer le câble à installer 3 et rendre la chambre d'admission de fluide 61 hermétique par rapport à l'ouverture d'introduction du câble dans le dispositif. Le dispositif de fixation 6 peut comprendre en outre un autre joint 64, identique au joint 63, destiné à retenir les projections d'eau éventuelles en direction du système de poussage (non illustré).

Un organe de serrage 9 est raccordé d'une part au conduit 1 et d'autre part au dispositif de fixation 6, assurant une liaison rigide entre ces deux éléments. L'organe de serrage 9 comprend à cet effet un rebord annulaire 90 complémentaire à un rebord annulaire 65 du corps de fixation 60, pour l'accouplement de l'organe de serrage 9 audit corps de fixation 60, ainsi que des nervures et rainures annulaires 91, de forme complémentaire aux cannelures du conduit 1, pour épouser la forme extérieure du conduit cannelé et s'incruster entre les cannelures, et des dents ou éléments de serrage annulaires 92 projetant d'une surface périphérique intérieure 93 d'une extension annulaire 94 pour la fixation au manchon support 5.

Le conduit d'installation 1 comprend une paroi extérieure cannelée 10 et une paroi intérieure 11 ondulée, soudée à la paroi extérieure 10. La double paroi, et notamment les cannelures donnent aux conduits une bonne résistance à la pression radiale par rapport à l'épaisseur des parois, c'est-à-dire la masse de matériaux (en l'occurrence polymère) par longueur du conduit. Quand le conduit est enterré, la terre entourant le conduit augmente la résistance à la pression. Un tel conduit ne résiste toutefois pas à une pression élevée quand il n'est pas enfoui, en raison de sa résistance relativement faible à l'élongation. En effet, une pression à l'intérieur du conduit génère également une force de traction dans la paroi interne 11, la paroi extérieure cannelée n'offrant aucune ou peu de résistance à la traction. Quand le tube est enfoui, La terre entourant les cannelures de la paroi extérieure offre toutefois une résistance radiale et axiale à cette paroi extérieure, palliant donc à ce problème d'élongation du tube. Pour résoudre ce problème, le dispositif d'installation comprend le manchon support 5, qui peut par exemple être un tube lisse, en plastique, avec une paroi suffisamment épaisse et rigide pour supporter la pression d'eau à l'intérieur du conduit d'installation. Le manchon support 5 aura donc un diamètre intérieur légèrement supérieur au diamètre extérieur du conduit cannelé 1 et une longueur suffisante pour manchonner toute la longueur hors sol du conduit 1.

Ainsi le manchon support 5 permet que la partie du conduit d'installation non enfouie, nécessaire pour le système d'injection d'eau et d'installation du câble, reste droite et ne s'allonge sous la pression d'eau injectée dans le conduit. A cet effet, le conduit 1 est fixé au manchon support 5 par l'organe de serrage 9 décrit plus haut ainsi que par la butée offerte par la surface en forme de couronne 66 disposée à l'intérieur du corps de fixation 60.

De préférence, le dispositif d'installation est ancré au sol par le dispositif d'ancrage 8 qui, dans cet exemple, comprend une flasque 80 fixée au manchon support 5 et engageant des barres d'ancrage 81 ou autres éléments d'ancrage fixés au sol. Toutefois on peut également envisager d'ancrer la machine de poussage au sol ou de disposer le dispositif d'ancrage 8 à n'importe quelle position sur le manchon 5 ou sur le dispositif de fixation 6. De préférence il sera fixé à proximité de l'extrémité libre du manchon 5 opposée à celle reliés au dispositif de fixation 6.

Comme on le voit à la figure 2, l'extrémité 51 du manchon support est de préférence engagée dans le sol entourant le conduit, c'est-à-dire enfouie, de sorte qu'il n'y a pas de partie de conduit 1 non manchonnée. Il convient de souligner qu'une des caractéristiques du conduit cannelé à double paroi est qu'il peut être plié pour avoir un rayon de courbure relativement faible en comparaison avec un tube lisse, mais que cette caractéristique est un inconvénient si le tube est sous pression sans support, puisqu'il aura tendance à se plier et à s'allonger d'un seul côté. Le manchon support 5 permet donc d'éviter que le conduit 1 d'installation se plie et s'allonge d'un côté.

L'ancrage de la machine et/ou manchon support 5, de par la fixation offerte par l'organe de serrage 9 ainsi que par la butée 66 décrits plus haut, évite l'allongement du tube sous pression.

Le câble 3 peut être de section circulaire, mais peut également avoir d'autres formes, telles qu'essentiellement triangulaires (par exemple pour un câble triphasé), ou essentiellement carrées. Les câbles peuvent également avoir des conducteurs torsadés. Cela pose un problème d'étanchéité pour l'introduction du câble dans un dispositif d'installation basé sur l'injection d'un fluide pour l'entraînement du furet 4.

Pour pouvoir garantir l'étanchéité pour toute forme de câble, le joint 63 est sous forme d'un joint à lèvres, la lèvre 630 étant élancée et ayant une longueur L telle que le rapport de cette longueur sur le diamètre ou largeur moyenne du câble soit au moins 0,3 (L/D>0,3). Le pourtour de l'extrémité de la lèvre 630 est choisi de manière à être plus court que le pourtour d'une section du câble, de préférence de 5 à 10% plus court, de manière à être sous traction élastique autour du câble. Le réservoir de lubrifiant 7 peut fournir un lubrifiant, par exemple à base de silicone, qui ménage les lèvres du joint 63 et qui réduit les forces de frottement entre le joint et le câble. Pour contenir des projections d'eau éventuelles, un deuxième joint 64 en amont du premier joint 63 peut être fourni, ce deuxième joint pouvant avoir essentiellement la même construction que le premier.

Pour assurer l'étanchéité entre le dispositif de fixation 6 et le conduit d'installation 1, un ou plusieurs joints sont disposés dans une ou plusieurs cannelures de la paroi extérieure 10 du conduit d'installation, ces joints 12 étant en appui élastique contre la surface périphérique intérieure 67 du corps 60. Les joints 12 peuvent par exemple être sous forme de O-Ring ou une paire d'O-Ring, l'une disposée sur l'autre afin qu'ils soient plus élastiques radialement pour tenir compte de la résistance relativement faible de la paroi intérieure 11 du conduit contre laquelle ces O-Ring sont en appui.

Le corps 60 de fixation et l'organe de serrage 9, à l'exception des joints 63, 64, 12 peuvent avantageusement être construits en deux parties de manière à pouvoir être désassemblés et assemblés autour du conduit et du tube de support.

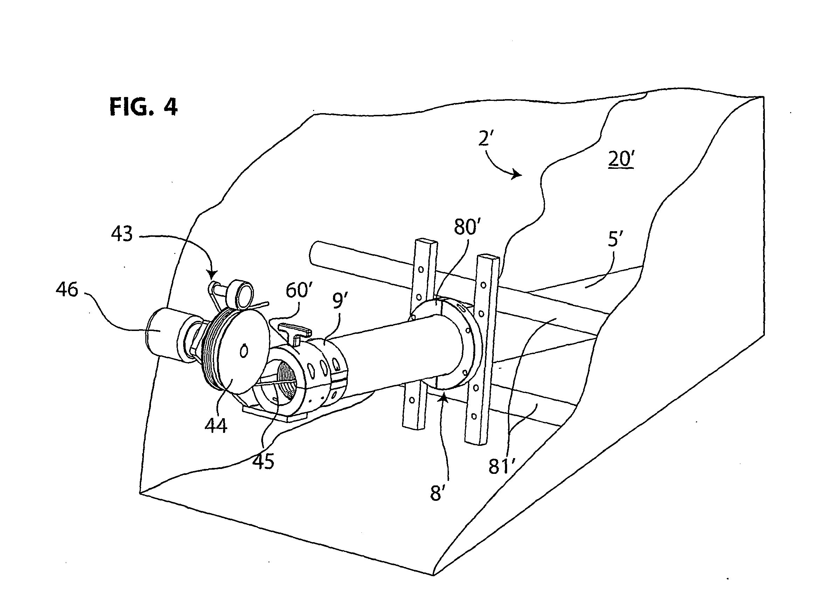

Faisant maintenant référence aux figures 4 et 5, on y voit l'extrémité en aval du conduit d'installation. Les composants disposés sur cette portion aval, de même nature que ceux décrits précédemment, sont repérés par le même chiffre accompagné d'un '. Afin d'augmenter la longueur de pose de câble, cette partie d'installation peut avantageusement comprendre un dispositif auxiliaire de traction 43, comprenant un enrouleur d'élingue 44 enroulant une élingue de traction 45, entraîné par un moteur 46. L'élingue 45 est attachée à son extrémité libre au moyen de fixation 41 à l'avant du furet 4.

Le moteur 46 peut avantageusement être asservi pour appliquer une traction spécifique et contrôlée sur l'élingue de traction 45, respectivement sur le câble 3. La traction appliquée sur le câble 3 peut être constante et limitée à une valeur limite déterminée empiriquement pour éviter l'endommagement du conduit cannelé par frottement avec l'élingue 45. Alternativement, la force de traction appliquée par le moteur peut être commandée de sorte que le couple de traction augmente avec la longueur d'élingue enroulée, étant donné que plus le furet s'approche de l'extrémité en aval du conduit, plus le câble est court et le risque de dommages diminué. D'autre part, la force nécessaire pour tirer le câble à installer augmente avec son avancement dans le conduit d'installation.

L'utilisation simultanée de plusieurs moyens d'installation du câble, à savoir le poussage du câble, son flottage dans de l'eau, la pression de poussage appliquée par l'eau et la force de traction appliquée par le câble de traction ensemble permettent de maximiser la longueur d'installation.

Afin de supporter la pression d'injection du fluide lorsque le furet arrive à l'extrémité en aval du conduit, ainsi que les forces appliquées par le câble de traction, la partie du conduit d'installation 1' hors sol en aval du système est également munie d'un manchon support 5', d'un dispositif d'ancrage 8', 81' similaire au manchon support 5, respectivement au dispositif d'ancrage 8, de la partie en amont. L'extrémité du tube de support 5 est fixée à un organe de serrage du conduit 9', similaire à l'organe de serrage 9 décrit auparavant, fixant le tube de support à un corps 60' auquel le dispositif auxiliaire de traction 43 est monté.

Si le dispositif d'installation est particulièrement adapté à une méthode de pose comportant une mise en pression par de l'eau du conduit 1, il peut tout aussi bien être utilisé pour une méthode de soufflage d'air sous pression ou une méthode de « portage-poussage ». De même il peut être utilisé favorablement pour une méthode ne nécessitant pas la mise en pression du conduit 1, soit par exemple par une méthode de « tirage-poussage », le manchon support 5 servant alors à reprendre les efforts de réaction mécanique lors du poussage du câble, évitant aussi dans ce cas l'endommagement de la portion hors sol du conduit 1.

## Revendications

1. Dispositif d'installation d'un câble (3) dans un conduit enterré (1) de type à parois minces et cannelures, comprenant un dispositif de poussage dudit câble (3)
**caractérisé en ce qu'**il comprend en outre:
un manchon support (5) comprenant des moyens de fixation (9, 60) d'une extrémité libre hors sol dudit conduit (1) de type à parois minces et cannelures, ledit manchon (5) étant apte à empêcher une dilatation radiale dudit conduit (1), alors que lesdits moyens de fixation (9, 60) sont aptes à empêcher un allongement de la portion hors sol dudit conduit (1), disposé en aval du dispositif de poussage dudit câble (3).

2. Dispositif d'installation d'un câble (3), selon la revendication 1, **caractérisé en ce qu'**il comprend en outre un dispositif d'admission de fluide (600), connectés audit manchon support (5) par l'intermédiaire d'un corps de fixation (60) pour la mise sous pression dudit conduit (1) de type à parois minces et cannelures afin de pousser un furet (4) connecté en tête du câble (3), le long dudit conduit (1).

3. Dispositif d'installation d'un câble (3), selon la revendication 1, **caractérisé en ce qu'**il comprend en outre un réservoir de lubrifiant (7) connecté audit manchon (5).

4. Dispositif d'installation d'un câble (3), selon l'une des revendications précédentes, **caractérisé en ce qu'**il comprend en outre un dispositif d'ancrage (8) fixé audit manchon (5), apte à fixer ledit manchon (5) en position relativement au sol.

5. Dispositif d'installation d'un câble (3), selon la revendication 1, **caractérisé en ce que** le diamètre intérieur du manchon support (5) est légèrement supérieur au diamètre extérieur dudit conduit (1).

6. Dispositif d'installation d'un câble (3), selon la revendication 1, **caractérisé en ce que** le manchon support (5) accouplé aux moyens de fixation (9, 60) est de longueur suffisante pour au moins manchonner entièrement toute la longueur hors sol dudit conduit (1).

7. Dispositif d'installation d'un câble (3), selon la revendication 1, **caractérisé en ce que** les moyens de fixation (9, 60) d'une extrémité libre hors sol dudit conduit (1) comprennent :
- un organe de serrage (9) comprenant un rebord annulaire 90 complémentaire à un autre rebord annulaire complémentaire (65) du corps de fixation (60) pour la fixation dudit organe de serrage (9) audit corps de fixation (60),
- des nervures et rainures annulaires (91) de forme complémentaire aux cannelures du conduit (1), aptes à s'incruster entre lesdites cannelures,
- des éléments de serrage annulaires (92) se projetant à partir d'une surface périphérique intérieur (93) d'une extension annulaire (94) dudit organe de serrage (9), apte à serrer et fixer une extrémité du manchon support (5) et
- une butée (66) en forme de couronne circulaire attenante audit corps de fixation (60).

8. Dispositif d'installation d'un câble (3), selon la revendication 1, **caractérisé en ce que** le dispositif de fixation (6) comprend au moins un joint à lèvres (63 ,64) entourant le câble (3) rendant étanche une chambre d'admission de fluide (61) relativement à l'extérieur du dispositif, ledit joint (63) ayant une lèvre (630) élancée de forme essentiellement conique, le rapport entre la longueur de la lèvre (L) et le diamètre minimal du câble (D) étant supérieur à 0.3.

9. Dispositif d'installation d'un câble (3), selon la revendication 1, **caractérisé en ce que** le dispositif de fixation (6) comprend un joint d'étanchéité, constitué d'un ou d'une paire de joints de type O-ring superposés (12), dispose entre une surface périphérique intérieure (67) du corps de fixation (60) et une paroi extérieur (10) dudit conduit (1), entre deux cannelures.

10. Dispositif d'installation d'un câble (3), selon la revendication 1, **caractérisé en ce qu'**un deuxième manchon support (5') est disposé de manière à protéger l'autre extrémité hors sol en aval dudit conduit (1).

11. Dispositif d'installation d'un câble (3), selon la revendication 10, **caractérisé en ce que** le deuxième manchon support (5') comprend un dispositif de traction (43) d'une élingue de traction (45) fixée audit furet (4).

## Claims

1. Device for laying cable (3) in a buried conduit (1) of ribbed type with thin walls, comprising a pushing device for said cable (3)
**characterized in that** it also comprises:
a supporting sleeve (5) comprising attachment means (9, 60) to attach a free non-buried end of said conduit (1) of ribbed, thin-wall type, said sleeve (5) being capable of preventing radial expansion of said conduit (1), while said attachments means (9,60) are capable of preventing elongation of the non-buried portion of said conduit (1), arranged downstream of the pusher device for said cable (3).

2. Device to lay cable (3) according to claim 1, **characterized in that** it also comprises a fluid inlet device (600) connected to said supporting sleeve (5) via an attachment body (60) to place under pressure said conduit (1) of ribbed, thin-wall type, so as to push a piston (4) connected to the front end of the cable (3) along said conduit (1).

3. Device to lay cable (3) according to claim 1, **characterized in that** it also comprises a lubricant tank (7) connected to said sleeve (5).

4. Device to lay cable (3) according to any of the preceding claims, **characterized in that** it also comprises an anchor device (8) secured to said sleeve (5), capable of securing said sleeve (5) in position relative to the ground.

5. Device to lay cable (3) according to claim 1, **characterized in that** the inner diameter of the supporting sleeve (5) is slightly greater than the outer diameter of said conduit (1).

6. Device to lay cable (3) according to claim 1, **characterized in that** the supporting sleeve (5) coupled to the attachment means (9,60) is of sufficient length to sleeve at least the entire non-buried length of said conduit (1).

7. Device to lay cable (3) according to claim 1, **characterized in that** the attachment means (9, 60) to attach one free, non-buried end of said conduit (1) comprise:
- a clamping member (9) comprising an annular rim (90) mating with another matching annular rim (65) of the attachment body (60) to secure said clamping member (9) to said attachment body (60),
- annular ridges and grooves (91) mating with the ribs of the conduit (1) capable of fitting between said ribs,
- annular clamping members (92) projecting from an inner peripheral surface (93) of an annular extension (94) of said clamping member (9), capable of clamping and securing one end of the supporting sleeve (5), and
- an abutment (66) in the form of a circular ring adjoining said attachment body (60).

8. Device to lay cable (3) according to claim 1, **characterized in that** the attachment device (6) comprises at least one lip seal (63,64) surrounding the cable (3) to make a fluid inlet chamber (61) watertight relative to the outside of the device, said seal (63) having a slender lip (630) of essentially tapered shape, the ratio between the length of the lip (L) and the minimum diameter (D) of the cable being greater than 0.3.

9. Device to lay cable (3) according to claim 1, **characterized in that** the attachment device (6) comprises a seal consisting of one or a pair of superimposed O-rings (12) arranged between an inner peripheral surface (67) of the attachment body (60) and an outer wall (10) of said conduit (1), between two ribs.

10. Device to lay cable (3) according to claim 1, **characterized in that** a second supporting sleeve (5') is arranged so as to protect the other non-buried end downstream of said conduit (1).

11. Device to lay cable (3) according to claim 10, **characterized in that** the second supporting sleeve (5') comprises a pulling device (43) to pull a winch line (45) attached to said piston (4).

## Patentansprüche

1. Vorrichtung zur Installation eines Kabels (3) in einer erdverlegten Leitung (1) der Bauart mit schlanken Wänden und Rillen, die eine Vorrichtung zum Schieben des Kabels (3) umfasst,
**dadurch gekennzeichnet, dass** sie weiterhin umfasst:
einen Haltestutzen (5), der Befestigungsmittel (9, 60) eines freien Endes außerhalb des Bodens der Leitung (1) der Bauart mit schlanken Wänden und Rillen umfasst, wobei der Stutzen (5) imstande ist, eine radiale Dehnung der Leitung (1) zu verhindern, wobei die Befestigungsmittel (9, 60) imstande sind, eine Verlängerung des Abschnitts außerhalb des Bodens der Leitung (1) zu verhindern, die nach der Vorrichtung zum Schieben des Kabels (3) angeordnet ist.

2. Vorrichtung zur Installation eines Kabels (3) nach Anspruch 1, **dadurch gekennzeichnet, dass** sie weiterhin eine Fluidaufnahmevorrichtung (600) umfasst, die mit dem Haltestutzen (5) über einen Befestigungskörper (60) verbunden ist, um die Leitung (1) der Bauart mit schlanken Wänden und Rillen unter Druck zu setzen, um eine am Kopf des Kabels (3) befestigte Kapsel (4) entlang der Leitung (1) zu schieben.

3. Vorrichtung zur Installation eines Kabels (3) nach Anspruch 1, **dadurch gekennzeichnet, dass** sie weiterhin einen Schmiermittelbehälter (7) umfasst, der mit dem Stutzen (5) verbunden ist.

4. Vorrichtung zur Installation eines Kabels (3) nach einem der vorangehenden Ansprüche, **dadurch gekennzeichnet, dass** sie weiterhin eine mit dem Stutzen (5) verbundene Verankerungsvorrichtung (8) umfasst, die imstande ist, den Stutzen (5) in relativer Position zum Boden zu befestigen.

5. Vorrichtung zur Installation eines Kabels (3) nach Anspruch 1, **dadurch gekennzeichnet, dass** der Innendurchmesser des Haltestutzens (5) etwas größer ist als der Außendurchmesser der Leitung (1).

6. Vorrichtung zur Installation eines Kabels (3) nach Anspruch 1, **dadurch gekennzeichnet, dass** der mit den Befestigungsmitteln (9, 60) verbundene Haltestutzen (5) ausreichend lang ist, um mindestens die gesamte Länge der Leitung (1) außerhalb des Bodens vollständig zu umschließen.

7. Vorrichtung zur Installation eines Kabels (3) nach Anspruch 1, **dadurch gekennzeichnet, dass** die Befestigungsmittel (9, 60) eines freien Endes der Leitung (1) außerhalb des Bodens umfassen:
- ein Spannorgan (9) mit einem ringförmigen Rand (90), der zu einem anderen ringförmigen Rand (65) des Befestigungskörpers (60) komplementär ist zur Befestigung des Spannorgans (9) am Befestigungskörper (60),
- komplementär zu den Rillen der Leitung (1) geformte ringförmige Rippen und Hohlkehlen (91), die imstande sind, zwischen den Rillen einzugreifen,
- ringförmige Spannelemente (92), die von einer peripheren Innenfläche (93) einer ringförmigen Erweiterung (94) des Spannorgans ausgehen, die imstande sind, ein Ende des Haltestutzens (5) zu spannen und zu befestigen und
- einen Anschlag (66) in Form eines kreisförmigen Kranzes, der am Befestigungskörper (60) angrenzt.

8. Vorrichtung zur Installation eines Kabels (3) nach Anspruch 1, **dadurch gekennzeichnet, dass** die Befestigungsvorrichtung (6) mindestens eine Lippendichtung (63, 64) umfasst, die das Kabel (3) umschließt, indem sie eine Fluidaufnahmekammer (61) relativ zur Außenseite der Vorrichtung abdichtet, wobei die Dichtung (63) eine dünne, im wesentlichen konische Lippe (630) hat, wobei das Verhältnis zwischen der Länge der Lippe (L) und dem kleinsten Durchmesser des Kabels (D) größer ist als 0,3.

9. Vorrichtung zur Installation eines Kabels (3) nach Anspruch 1, **dadurch gekennzeichnet, dass** die Befestigungsvorrichtung (6) eine Dichtung umfasst, die von einer Dichtung oder einem übereinander liegenden Dichtungspaar der Bauart O-Ring (12) gebildet wird, die zwischen einer peripheren Innenfläche (67) des Befestigungskörpers (60) und einer Außenwand (10) der Leitung (1) zwischen zwei Rillen angeordnet ist.

10. Vorrichtung zur Installation eines Kabels (3) nach Anspruch 1, **dadurch gekennzeichnet, dass** ein zweiter Haltestutzen (5') derart angeordnet ist, um das andere Ende außerhalb des Bodens nach der Leitung (1) zu schützen.

11. Vorrichtung zur Installation eines Kabels (3) nach Anspruch 10, **dadurch gekennzeichnet, dass** der zweite Haltestutzen (5') eine Zugvorrichtung (43) einer Zugschlinge (45) umfasst, die an der Kapsel (4) befestigt ist.
